# EUROPÄISCHE PATENTSCHRIFT

(11) **EP 1 285 783 B1**
(45) Veröffentlichungstag und Bekanntmachung des Hinweises auf die Patenterteilung: **29.10.2008**
(21) Anmeldenummer: 02018314.1
(22) Anmeldetag: 14.08.2002
(51) Int. Cl.: B60B 27/00

(54) **Radnaben-Einheit und Achsschenkel für die Radaufhängung eines Kraftfahrzeuges sowie Verfahren für deren Herstellung**
Wheel hub unit and steering knuckle for a wheel suspension of a motor vehicle and manfacturing method
Ensemble de moyeux de roue et fusée d'essieu pour suspension de roue d'un véhicule à moteur et sa méthode de production

(30) Priorität: 23.08.2001 DE 10141402
(43) Veröffentlichungstag der Anmeldung: 26.02.2003
(73) Patentinhaber: Ford-Werke GmbH, 50735 Köln (DE); GKN Driveline Deutschland GmbH, 63073 Offenbach/Main 1 (DE)
(72) Erfinder: Graaf, Roger, 6271 EK Gulpen (NL); Storz, Andreas, 40699 Erkrath (DE); Schmidt, Michael, 66646 Marpingen (DE); Cermak, Herbert, 63856 Strassbessenbach (DE)
(74) Vertreter: Bonsmann, Manfred

(56) Entgegenhaltungen:
- DE-A- 3 634 383
- DE-A- 19 653 542
- DE-A- 19 700 313
- US-B1- 6 357 557

## Beschreibung

Die Erfindung betrifft eine Radnaben-Einheit für ein Kraftfahrzeug, einen Achsschenkel für ein Kraftfahrzeug sowie eine Radaufhängung für das Rad eines Kraftfahrzeugs. Ferner betrifft die Erfindung ein Verfahren zur Herstellung einer derartigen Radnaben-Einheit beziehungsweise eines derartigen Achsschenkels.

In der Radaufhängung eines Kraftfahrzeuges wird das Rad relativ zur Karosserie drehbar und gefedert gelagert. Bei angetriebenen Rädern ist darüber hinaus das Rad mit einer Antriebswelle verbunden, wobei die Kopplung vorzugsweise über ein Gleichlaufgelenk geschieht, welches eine Übertragung der Drehbewegung auch bei einer relativen Verstellung der Achswinkel von Antriebswelle und Rad gewährleistet. Ferner müssen die Radaufhängungen gelenkter Räder die entsprechenden Lenkbewegungen der Räder ermöglichen.

Ein typischer Aufbau einer Radaufhängung ist zum Beispiel aus der DE 197 00 313 A1 bekannt. Die dort beschriebene Radaufhängung enthält einen Achsschenkel beziehungsweise Radträger, welcher vorzugsweise über Stoßdämpfer mit der Karosserie verbunden ist. Der Achsschenkel weist einen Radlager-Außenring mit zwei parallelen Laufrillen für Wälzkugeln auf. Korrespondierend hierzu ist ein Radlager-Innenring mit zwei Laufrillen für die Wälzkugeln vorgesehen, wobei der Radlager-Innenring an der Außenseite einer Radnabe angeordnet ist. Durch den Innenring, den Außenring und die Wälzkugeln wird ein Radlager gebildet, in welchem die Radnabe drehbar am Achsschenkel gelagert ist. An der Radnabe können weitere Elemente wie insbesondere die Felgen und eine Bremsscheibe befestigt werden. Über ein Gleichlaufgelenk ist die Radnabe mit einer Antriebswelle verbunden.

Weiterhin ist aus der DE 196 53 542 A1 ein spezieller Achsschenkel bekannt, bei welchem ein verlorener Hohlkörper vollständig umgossen wird, um eine leichtere Bauweise des Achsschenkels zu erreichen.

Aus der DE 36 34 383 A1 ist es bekannt, zwei Maschinenteile an einer gemeinsamen zylindrischen Kontaktfläche verdrehsicher miteinander zu verbinden, indem das härtere der Teile mit einer speziellen Rändelung versehen wird, in welche das andere Teil durch Verformen oder Umgießen eingreift.

Bei den bekannten Radaufhängungen werden die Radnabe, die Anlenkelemente, der Radlager-Innenring, der Radlager-Außenring, das Gleichlaufgelenk, die Bremsscheibe, der Bremssattel, die Felge, das Federbein und weitere Funktionselemente als separate Teile hergestellt und mittels zahlreicher Schraub- oder Bolzenverbindungen zusammengefügt. Die hohe Anzahl von Teilen führt zu einer verhältnismäßig aufwendigen Montage der Radaufhängung. Darüber hinaus schwächen die vielen Verbindungen zwischen den Teilen auch die Stabilität der Gesamtkonstruktion.

Vor diesem Hintergrund war es eine Aufgabe der vorliegenden Erfindung, eine vereinfachte Konstruktion einer Radaufhängung zu schaffen, welche sowohl leichter zu montieren ist als auch eine höhere Stabilität aufweist.

Diese Aufgabe wird durch eine Radnaben-Einheit mit den Merkmalen des Patentanspruchs 1, einen Achsschenkel mit den Merkmalen des Patentanspruchs 4, eine Radaufhängung mit den Merkmalen des Patentanspruchs 9 sowie durch ein Verfahren mit den Merkmalen des Patentanspruchs 10 gelöst.

Vorteilhafte Ausgestaltungen sind in den Unteransprüchen enthalten.

Gemäß einem ersten Aspekt betrifft die vorliegende Erfindung eine Radnaben-Einheit für ein Kraftfahrzeug, welche dadurch gekennzeichnet ist, dass in die Radnabe Funktionsteile aus einem anderen Material als dem Kernmaterial der Radnabe, aus dem diese überwiegend besteht, durch teilweises Umgießen mit dem genannten Kernmaterial integriert sind. Das Umgießen erfolgt so, dass zumindest die funktionstragenden Oberflächen der Funktionsteile frei bleiben.

Eine derartige Radnaben-Einheit zeichnet sich durch eine innige und stabile Verbindung zwischen dem Kern der Radnabe und den in das Kernmaterial eingebetteten Funktionsteilen (Einlegeteilen) aus, wobei durch die unterschiedliche Materialwahl gewährleistet ist, dass Radnabe und Funktionsteile jeweils aus dem für ihren Zweck optimalen Material bestehen können. Für die Verbindung zwischen dem Kern der Radnabe und den Funktionsteilen sind dabei keine zusätzlichen Schrauboder Nietverbindungen erforderlich, was einerseits den Montageaufwand reduziert und andererseits eine erhöhte Stabilität der Einheit bewirkt.

Als Funktionsteile zur Einbettung in das Kernmaterial der Radnabe kommen prinzipiell alle mit herkömmlichen Radnaben fest verbundenen Funktionsteile wie insbesondere der Radlager-Innenring, die Gleichlaufgelenk-Außenschale, die Bremsscheibe, Radbefestigungselemente wie Bolzen oder Buchsen sowie sonstige Verstärkungselemente in Frage. Alle genannten Teile werden bisher separat an der Radnabe angebracht, z.B. verschraubt. Dieser Aufwand kann durch die integrale Ausbildung der Radnabe mit den Funktionsteilen reduziert werden, so dass anschließend eine kompakte Radnaben-Einheit für die Endmontage zur Verfügung steht.

Das Kernmaterial der Radnabe, aus dem diese ganz oder überwiegend besteht, enthält vorzugsweise Aluminium. Insbesondere kann das Kernmaterial auch ganz aus Aluminium bestehen. Aluminium hat den Vorteil, einerseits zu leichten, stabilen Bauelementen zu führen und sich andererseits durch Gießprozesse gut verarbeiten zu lassen.

Gemäß einer bevorzugten Ausgestaltung der Radnabe kann diese mindestens einen Flansch aufweisen, an welchem eine Bremsscheibe und/oder das Rad befestigt werden können. Dies gewährleistet eine stabile und reversible Möglichkeit, die genannten Elemente mit der Radnabe zu verbinden.

Die in das Kernmaterial der Radnabe eingebetteten Funktionsteile sind vorzugsweise an ihrer Kontaktfläche zum Kernmaterial strukturiert ausgebildet. Die Strukturierung kann dabei zum Beispiel durch eine Profilierung, eine Rändelung, eine Aufrauhung und/oder eine Beschichtung erzeugt werden. Durch die Strukturierung kommt es zu einem besseren Verbund zwischen dem Kernmaterial und dem Funktionsteil, so dass eine höhere Stabilität des gesamten Bauteils erzielt wird. Insbesondere kann die Strukturierung auch zu einer formschlüssigen Verbindung zwischen dem Funktionsteil und dem Kern der Radnabe führen.

Wie bereits erwähnt, können die Funktionsteile aus dem für ihren Einsatzzweck jeweils optimalen Material bestehen. Dabei kann es sich insbesondere um gehärteten Stahl handeln, so dass die Funktionsteile eine hohe Festigkeit aufweisen, welche gewährleistet, dass sie ihre Aufgabe zuverlässig erfüllen. Funktionsteile mit besonderen Funktionen können jedoch auch aus anderen geeigneten Materialien bestehen. So kann etwa die Bremsscheibe aus Grauguss, aus Keramik oder aus MMC bestehen.

Die Erfindung betrifft ferner einen Achsschenkel für ein Kraftfahrzeug, wobei der Achsschenkel in der eingangs definierten Weise über ein Radlager die Verbindung zwischen der Karosserie des Kraftfahrzeugs und der Radnabe herstellt. Der erfindungsgemäße Achsschenkel ist dadurch gekennzeichnet, dass in ihm Funktionsteile aus einem anderen Material als dem Kernmaterial des Achsschenkels, aus dem dieser überwiegend besteht, durch teilweises Umgießen mit dem genannten Kernmaterial integriert sind, wobei funktionstragende Oberflächen der Funktionsteile frei bleiben.

Durch die Einbettung der Funktionsteile in das Kernmaterial des Achsschenkels entsteht eine innige und stabile Verbindung zwischen dem Achsschenkel und dem Funktionsteil, ohne dass hierfür eine Schraub- oder Nietverbindung erforderlich wäre. Daher entfällt der Montageaufwand für eine derartige Verbindung, und gleichzeitig wird eine insgesamt stabilere Konstruktion erzielt.

Als in das Kernmaterial des Achsschenkels einbettbare Funktionsteile kommen prinzipiell alle mit herkömmlichen Achsschenkeln fest verbundenen Funktionsteile wie insbesondere der Radlager-Außenring, Bremsenbauteile wie ein Bremssattel, ein Bremszylinder oder Hydraulikanschlüsse der Bremse, Federbeinelemente, Dämpferelemente, Verstärkungselemente und/oder Lenkeranlenkpunkte in Frage. Die genannten Teile werden bisher nach separater Herstellung in eigenen Montageschritten mit dem Achsschenkel verbunden. Dieser Aufwand entfällt bei der erfindungsgemäßen Integration durch Einbettung in das Kernmaterial, wobei gleichzeitig eine stabilere Verbindung erzielt wird.

Die Funktionsteile für den Achsschenkel sind vorzugsweise an ihrer Kontaktfläche zum Kernmaterial des Achsschenkels strukturiert. Dabei kann die Strukturierung durch eine Profilierung, durch Rändelung, durch Aufrauhung und/oder durch eine Beschichtung erzielt werden. Die Struktur führt zu einer besseren Verbindung zwischen Kernmaterial und Funktionsteil, wobei insbesondere eine formschlüssige Verbindung entstehen kann.

Die Funktionsteile können aus dem für ihren Einsatzzweck jeweils optimalen Material hergestellt sein. Hierbei kann es sich insbesondere um gehärteten Stahl handeln, welcher eine hohe Festigkeit gegenüber Beanspruchungen aufweist.

Das Kernmaterial des Achsschenkels, aus dem dieser ganz oder überwiegend besteht, kann vorzugsweise Aluminium enthalten oder hieraus bestehen, wobei die damit verbundenen Vorteile bereits erwähnt wurden.

Das am Achsschenkel ausgebildete Lager für das Rad des Kraftfahrzeugs kann gemäß einer bevorzugten Ausgestaltung der Erfindung als Flanschlager ausgebildet sein. Eine derartige Ausbildung ist insbesondere bei einem Achsschenkel aus Leichtmetall vorteilhaft.

Die Erfindung betrifft ferner einen Achsschenkel, welcher für die Aufnahme eines aus einem Radlager-Außenring, einem Radlager-Innenring sowie Wälzelementen bestehenden Radlagers ausgestaltet ist. Der Achsschenkel ist dadurch gekennzeichnet, dass der Radlager-Außenring integral mit dem Achsschenkel ausgebildet ist. Anders als bei herkömmlichen Achsschenkeln ist somit der Radlager-Außenring kein separates Teil, welches getrennt vom Achsschenkel hergestellt und anschließend mit diesem verbunden wird. Vielmehr werden Achsschenkel und Radlager-Außenring einstückig hergestellt, was das Produktionsverfahren entsprechend vereinfacht.

Weiterhin betrifft die Erfindung eine Radaufhängung für das Rad eines Kraftfahrzeugs, welche dadurch gekennzeichnet ist, dass diese eine Radnaben-Einheit der vorstehend genannten Art und/oder einen Achsschenkel der vorstehend genannten Art enthält. Bei einer derartigen Radaufhängung enthalten somit die Radnabe und/oder der Achsschenkel Funktionsteile, welche in das jeweilige Kernmaterial eingebettet sind. Die Radaufhängung lässt sich daher mit einer geringeren Anzahl von Montageschritten zusammenbauen, wobei aufgrund der eingebetteten Funktionsteile gleichzeitig eine stabilere Konstruktion erreicht wird.

Die Erfindung beinhaltet somit die Verwendung von Bauteilen, bei denen Funktionsteile durch Umgießen in ein Kernmaterial eingebettet sind, als Radnabe, als Achsschenkel und/oder als Radaufhängung eines Kraftfahrzeugs.

Schließlich betrifft die Erfindung auch ein Verfahren zur Herstellung einer Radnaben-Einheit und/oder eines Achsschenkels der oben erläuterten Art. Bei diesem Verfahren werden die Funktionsteile vorgefertigt, anschließend in einer Gussform angeordnet und dann mit verflüssigtem Kernmaterial der Radnabe beziehungsweise des Achsschenkels umgossen. Durch das Umgießen der vorgefertigten, festen Funktionsteile mit dem flüssigen Kernmaterial wird gewährleistet, dass die Funktionsteile zumindest teilweise im Kernmaterial eingebettet werden, wobei ein inniger Kontakt zwischen Funktionsteilen und Kernmaterial entsteht. Durch entsprechende Formgebung beziehungsweise Strukturierung der Oberfläche der Funktionsteile kann die Festigkeit der Verbindung zwischen diesen und dem Kernmaterial zusätzlich erhöht werden. Das Verfahren hat weiterhin den Vorteil, dass mehrere Bauelemente gleichzeitig in einem einzigen Herstellungsschritt mit der Radnabe beziehungsweise dem Achsschenkel verbunden werden können. Bei herkömmlicher Bauweise ist dagegen für jedes Bauteil ein separater Montageschritt erforderlich.

Vorzugsweise wird bei dem Verfahren das Kernmaterial in einem Druckgussverfahren in die Gussform gegossen. Dies stellt sicher, dass keine Hohlräume in der Gussform verbleiben, welche die Stabilität des entstehenden Bauteils mindern könnten, und dass das Kernmaterial eine gewünschte Dichte im fertigen Bauteil annimmt.

Gemäß einer Weiterbildung des Verfahrens werden die Funktionsteile vor dem Eingießen des Kernmaterials in die Gussform erwärmt. Die Erwärmung verhindert, dass es bei dem Kontakt des flüssigen Kernmaterials mit den Funktionsteilen zu einer plötzlichen starken Abkühlung des Kernmaterials kommt, welche zu dessen vorzeitiger Verfestigung mit der Folge eines unzureichenden Kontaktes und mechanischer Spannungen führen könnte.

Im Folgenden wird die Erfindung anhand der Figuren beispielhaft näher erläutert.
- Fig. 1: zeigt eine erste Ausführungsform einer erfindungsgemäßen Radnaben-Einheit mit integrierter Bremsscheibe;
- Fig. 2: zeigt eine zweite Ausgestaltung einer Radnaben-Einheit in einer Aufsicht, in einem Querschnitt, in einer Seitenansicht und in einer Schnittperspektive;
- Fig. 3: zeigt eine dritte Ausgestaltung einer Radnaben-Einheit mit integrierter Felge im Querschnitt;
- Fig. 4: zeigt eine vierte Ausgestaltung einer Radnaben-Einheit in einer Aufsicht, in einem Querschnitt, in einer Seitenansicht und in einer Schnittperspektive;
- Fig. 5: zeigt eine fünfte Ausgestaltung einer Radnaben-Einheit in einer Aufsicht, in einem Querschnitt, in einer Seitenansicht und in einer Schnittperspektive;
- Fig. 6: zeigt einen Querschnitt durch eine Radaufhängung mit einem erfindungsgemäßen Achsschenkel.

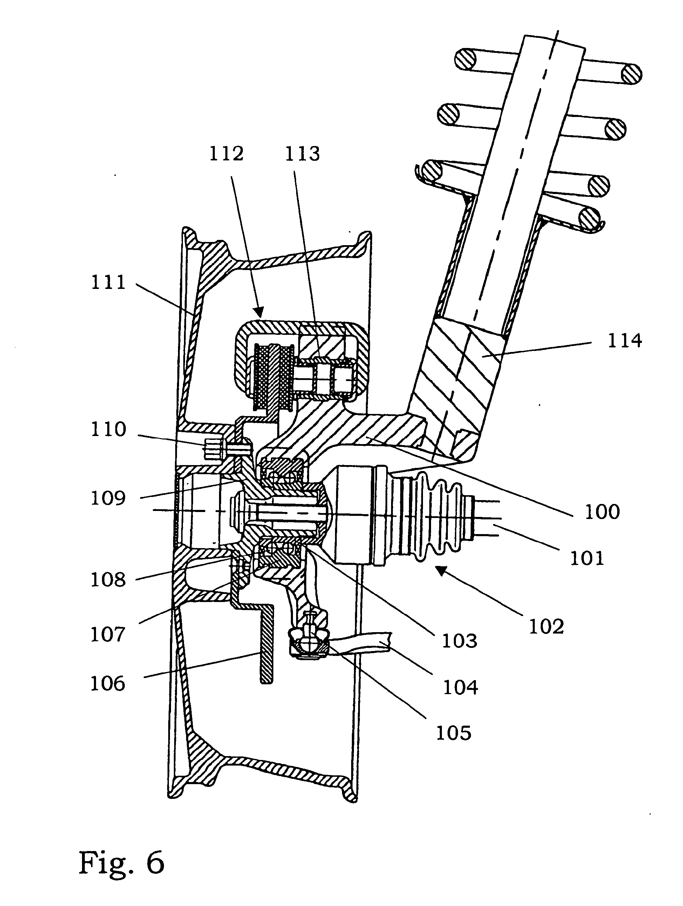

Die Beschreibung von Ausführungsbeispielen der Erfindung soll mit Figur 6 begonnen werden, da diese in einem Querschnitt alle Teile einer Radaufhängung für den Fall eines angetriebenen Rades zeigt.

Von einer Achswelle oder Antriebswelle 101 wird ein Antriebsdrehmoment bereitgestellt. Am radseitigen (in Figur 6 linken) Ende der Antriebswelle 101 befindet sich ein durch eine Gummimanschette geschütztes Gleichlaufgelenk 102 von an sich bekannter Bauart, welches nicht weiter im Detail dargestellt ist. Über das Gleichlaufgelenk 102 wird das Antriebsdrehmoment auf die Radnabe 109 übertragen. Das Gleichlaufgelenk 102 sorgt dabei auch im Falle von Winkelverstellungen zwischen der Antriebswelle 101 und der Achse der Radnabe 109 für eine gleichmäßige Übertragung der Drehbewegung.

Die Radnabe 109 weist einen radial abstehenden ringförmigen Flansch auf, an welchem die Felge 111 über Schrauben 110 befestigt ist. Auf der Felge 111 kann der Reifen (nicht dargestellt) aufgezogen werden. Ferner ist am Flansch der Radnabe 109 die Bremsscheibe 106 festgeschraubt. Diese wird an einer Stelle (in Figur 6 oben) von der Scheibenbremse 112 umgriffen.

Die drehbewegliche Lagerung der Radnabe 109 gegenüber der Fahrzeugkarosserie erfolgt über ein Radlager, das zwischen der Radnabe und dem Achsschenkel 100 ausgebildet ist. Das Radlager besteht aus einem Radlager-Innenring 103, welcher koaxial mit der Radnabe 109 ausgebildet ist, sowie einem korrespondierenden Radlager-Außenring 107, der mit dem Achsschenkel 100 verbunden ist. Der Radlager-Innenring 103 und der Radlager-Außenring 107 weisen jeweils zwei parallele Laufrillen für Wälzelemente wie zum Beispiel Kugeln 108 auf.

Der Achsschenkel 100 stellt ferner eine gefederte und gedämpfte Verbindung zur Karosserie her, da er mit der Federbeinstütze 114 des Federbeines (und gegebenenfalls weiteren Stützelementen) fest verbunden ist. Ferner trägt der Achsschenkel 100 die Bremszylinder 113 und den Bremssattel der Scheibenbremse 112 und stellt Lenkeranlenkpunkte für eine Lenkerstange 104 bereit. Bei gelenkten Rädern wird durch entsprechendes Schwenken des Achsschenkels 100 die Drehachse des entsprechenden Rades geändert.

Der erfindungsgemäße Achsschenkel 100 zeichnet sich dadurch aus, dass er zusammen mit dem Radlager-Außenring 107 integral ausgebildet ist. Eine solche integrale Ausbildung kann durch einteilige Herstellung oder durch form- und/oder stoffschlüssige Verbindung eines zunächst separaten Radlager-Außenringes mit einem Achsschenkel hergestellt werden. Vorzugsweise erfolgt die Herstellung jedoch - wie in dem dargestellten Ausführungsbeispiel angedeutet ist - derart, dass ein vorgefertigter Radlager-Außenring 107 durch Umgießen mit dem Material des Achsschenkels in diesen eingebettet wird. Dabei können vorteilhafterweise die Materialien für den Achsschenkel und das Radlager verschieden und im Hinblick auf ihre jeweiligen Anforderungen optimal gewählt werden.

Zusätzlich oder alternativ zum Radlager-Außenring 107 können noch weitere Bauelemente in den Achsschenkel 100 integriert werden. So können beispielsweise Bremsfunktionen in den Achsschenkel aufgenommen werden, was im Beispiel aus Figur 6 durch die Integration des Bremszylinders 113 geschieht. Vorzugsweise wird der Bremszylinder dabei wiederum als separat hergestelltes Teil mit dem Material des Achsschenkels 100 umgossen.

Des weiteren können Dämpfungselemente in die Achsschenkelkonstruktion integriert werden durch Eingießen in der geschilderten Weise oder durch einteiliges Herstellen des Dämpferzylinders und ähnlicher Bauteile. In Figur 6 ist z.B. die Federbeinstütze 114 durch Eingießen in den Achsschenkel 100 integriert.

Schließlich können auch Lenkeranlenkpunkte durch Eingießen beziehungsweise einteilige Herstellung in den Achsschenkel 100 integriert werden. So sind beispielsweise in Figur 6 die Kugelköpfe 105 für die Lenkeranlenkpunkte der Lenkerstange 104 durch Eingießen in den Achsschenkel 100 integriert.

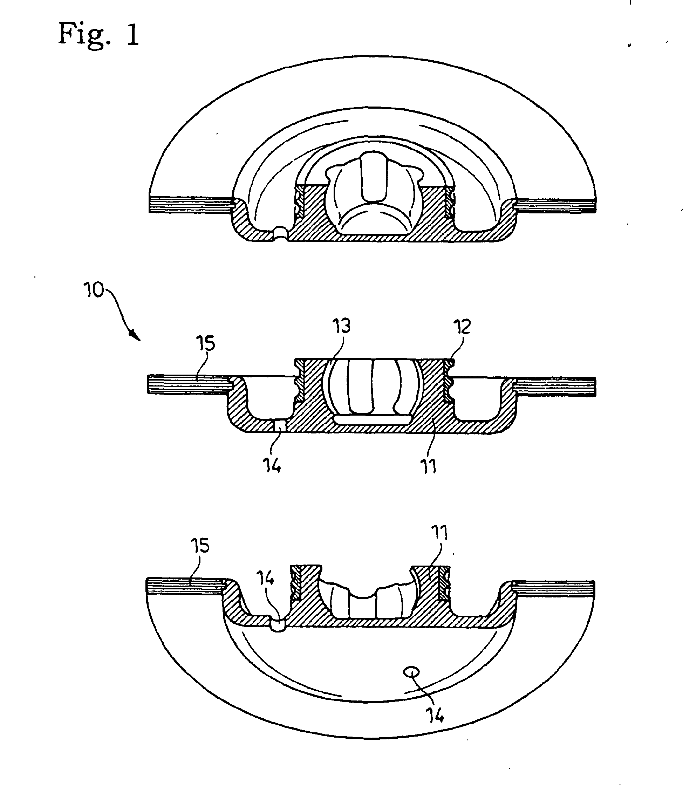

Die Einheit aus Achsschenkel 100 und Radlager-Außenring 107 kann mit einer nachfolgend noch anhand der Figuren 1 bis 6 zu beschreibenden Einheit aus Radnabe 109 und Radlager-Innenring 103 unlösbar zu einer Gesamteinheit verbunden werden. Als maximale Integrationsform wird dabei der Zusammenbau der Achsschenkeleinheit mit der Radnaben-Einheit über die Montage des Radlagers an sich oder über die Montage des Radlagers auf die Radnaben-Einheit oder über eine Kombination dieser Montagearten zu einer unlösbaren Cornereinheit vorgenommen.

Verschiedene Ausgestaltungen für eine integrierte Bauweise einer Radnaben-Einheit sind in den Figuren 1 bis 5 dargestellt.

Figur 1 zeigt dabei eine erste Ausgestaltungsform einer Radnaben-Einheit 10 in einem Querschnitt (Mitte) beziehungsweise einer perspektivischen Ansicht des Schnittes von oben und unten. Die Radnaben-Einheit 10 besteht aus der eigentlichen Radnabe 11 mit darin integrierten Funktionsteilen bzw. Einlegeteilen. Bei den Funktionsteilen handelt es sich im Einzelnen um den Radlager-Innenring 12, die Gleichlaufgelenk-Außenschale 13 sowie die Bremsscheibe 15. Ferner sind in der Radnabe 11 Bohrungen 14 für die Befestigung einer Felge vorgesehen.

Die Herstellung der Radnaben-Einheit 10 erfolgt so, dass zunächst die Funktionsteile 12, 13, 15 vorgefertigt und in einer Gussform angeordnet werden. Dann wird in die Gussform flüssiges Aluminium oder eine Aluminiumlegierung eingefüllt, was vorzugsweise in einem Druckgussverfahren ("Squeezecasting") erfolgt. Hierdurch kommt es zu einer Einbettung der Funktionsteile, so dass eine optimale kraft- und formschlüssige Verbindung von Aluminium-Umguss 11 zu Funktionsteil entsteht. Es werden Werkstoffdichten und damit Festigkeiten erreicht, die an die von Schmiedeteilen heranreichen. Da Schraub- oder Bolzenverbindungen nicht notwendig sind, werden erheblich weniger Bauteile benötigt. In vorteilhafter Weise können die Funktionsteile eine Strukturierung wie beispielsweise eine Profilierung, eine Rändelung, eine Aufrauhung oder eine Beschichtung aufweisen, welche sie mit dem Aluminium besser verbindet. Ferner können die Funktionsteile vor dem Eingießen des Aluminiums erwärmt werden, um die entstehende Verbindung zu stärken. Anstelle des Aluminiums können für die Radnabe auch andere gießfähige Materialen wie z.B. ein geeigneter Kunststoff verwendet werden.

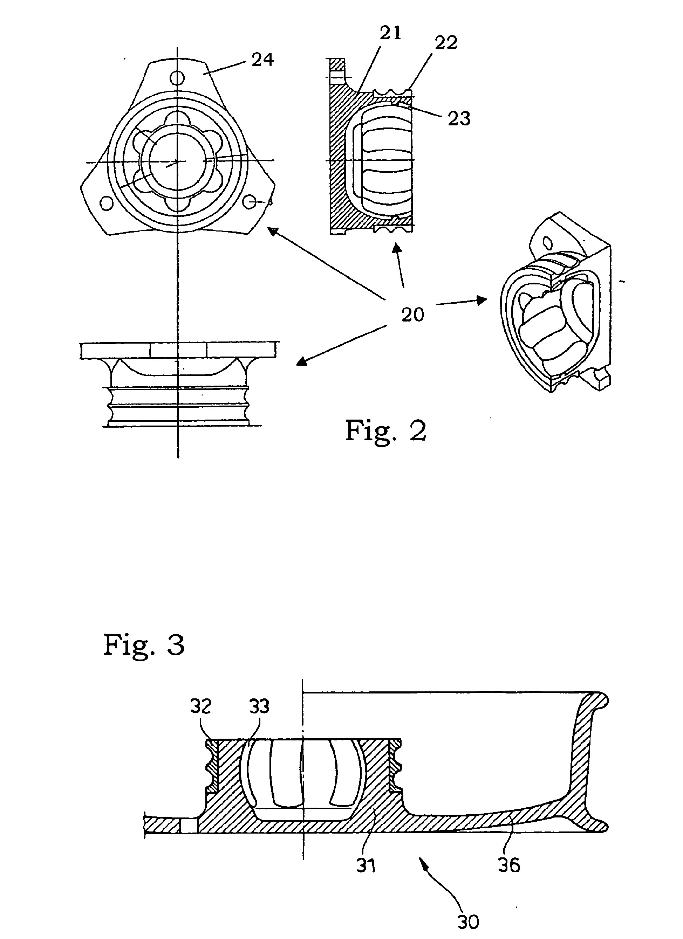

Figur 2 zeigt eine zweite Ausgestaltungsform einer Radnaben-Einheit 20, bei welcher entsprechend den obigen Erläuterungen an einen Radlager-Innenring 22 und eine Gleichlaufgelenk-Außenschale 23 die aus Aluminium bestehende Radnabe 21 angegossen ist. Für die Befestigung des Rades und einer Bremsscheibe weist die Radnabe 21 im übrigen radial abstehende Flansche 24 auf.

Bei der in Figur 3 dargestellten dritten Variante einer Radnaben-Einheit 30 sind wiederum ein Radlager-Innenring 32 sowie eine Gleichlaufgelenk-Außenschale 33 mit dem Aluminium der Radnabe 31 umgossen. Darüber hinaus ist die komplette Felge 36 einstückig mit der Radnabe 31 als Aluminium-Umguss ausgeführt.

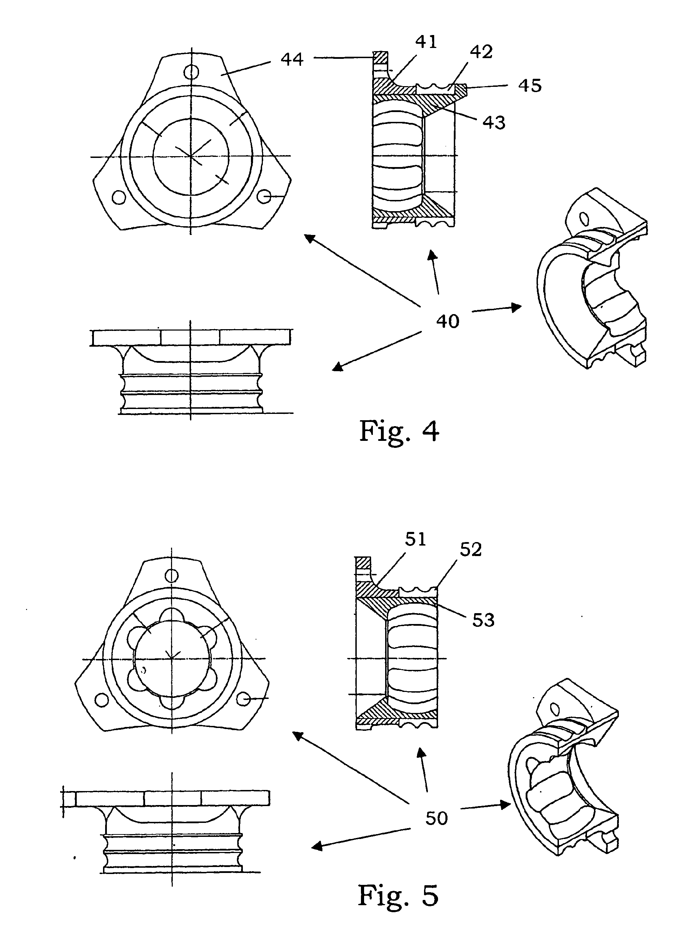

Figur 4 zeigt in verschiedenen Ansichten eine vierte Ausgestaltungsform einer Radnaben-Einheit 40. Hierbei ist der Kern 41 der Radnabe mit dem Flansch 44 direkt auf die vorzugsweise zylindrische Außenfläche der Gleichlaufgelenk-Außenschale 43 gegossen. Bei der Herstellung dieser Einheit wird die Gleichlaufgelenk-Außenschale 43 in eine Gussform eingelegt und mit dem Kernmaterial 41 umgossen. Der Radlager-Innenring 42 kann anschließend direkt auf die Gleichlaufgelenk-Außenschale 43 gesetzt werden. Wie in Figur 4 dargestellt ist es jedoch auch möglich, an der Gleichlaufgelenk-Außenschale 43 einen radial nach außen stehenden Anschlag 45 vorzusehen. Der Radlager-Innenring 42 wird dann von der Seite des späteren Radnaben-Flansches her gegen den Anschlag 45 geschoben, und anschließend wird das Kernmaterial der Radnabe 41 um- bzw. angegossen. Dadurch wird der Radlager-Innenring 42 axial gesichert und kann nicht mehr zerstörungsfrei demontiert werden.

Die Radnaben-Einheit 50 aus Figur 5 entspricht derjenigen aus Figur 4 bis auf den Unterschied, dass die Gleichlaufgelenk-Außenschale 53 spiegelbildlich in die von Radnabe 51 und Radlager-Innenring 52 gebildete Zylinderöffnung eingesetzt ist.

## Patentansprüche

1. Radnaben-Einheit (10; 20; 30; 40; 50) für ein Kraftfahrzeug,
**dadurch gekennzeichnet, dass** in die Radnabe (11, 21; 31; 41; 51) Funktionsteile (12, 13, 15; 22, 23; 32, 33; 42, 43; 52, 53) aus einem anderen Material als dem Kernmaterial der Radnabe durch teilweises Umgießen mit dem genannten Kernmaterial integriert sind.

2. Radnaben-Einheit nach Anspruch 1,
**dadurch gekennzeichnet, dass** die Funktionsteile durch den Radlager-Innenring (12; 22; 32; 42; 52), durch die Gleichlaufgelenk-Außenschale (13; 23; 33; 43; 53), durch die Bremsscheibe (15), durch Radbefestigungselemente wie Bolzen oder Buchsen, und/oder durch Verstärkungselemente gebildet werden.

3. Radnaben-Einheit nach einem der Ansprüche 1 oder 2,
**dadurch gekennzeichnet, dass** die Funktionsteile (12, 13, 15; 22, 23; 32, 33; 42, 43; 52, 53) an ihrer Kontaktfläche zum Kernmaterial der Radnabe (11; 21; 31; 41; 51) strukturiert sind, vorzugsweise durch Profilierung, Rändelung, Aufrauhung und/oder eine Beschichtung.

4. Achsschenkel (100) für ein Kraftfahrzeug,
**dadurch gekennzeichnet, dass** in dem Achsschenkel Funktionsteile (105, 107, 113, 114) aus einem anderen Material als dem Kernmaterial des Achsschenkels durch teilweises Umgießen mit dem genannten Kernmaterial integriert sind.

5. Achsschenkel nach Anspruch 4,
**dadurch gekennzeichnet, dass** die Funktionsteile durch den Radlager-Außenring (107), durch Bremsenbauteile wie einen Bremssattel, einen Bremszylinder (113) oder Hydraulikanschlüsse, durch Federbeinelemente (114), durch Dämpferelemente, durch Verstärkungselemente und/ oder durch Lenkeranlenkpunkte (105) gebildet werden.

6. Achsschenkel nach einem der Ansprüche 4 oder 5,
**dadurch gekennzeichnet, dass** die Funktionsteile (105, 107, 113, 114) an ihrer Kontaktfläche zum Kernmaterial des Achsschenkels strukturiert sind, vorzugsweise durch Profilierung, Rändelung, Aufrauhung und/oder eine Beschichtung.

7. Achsschenkel nach mindestens einem der Ansprüche 4 bis 6,
**dadurch gekennzeichnet, dass** das Lager für das Rad als Flanschlager ausgebildet ist.

8. Achsschenkel (100) nach Anspruch 4, **dadurch gekennzeichnet, dass** dieser für die Aufnahme eines aus einem Radlager-Außenring (107), einem Radlager-Innenring (103) sowie Wälzelementen (108) bestehenden Radlagers ausgebildet ist, wobei der Radlager-Außenring (107) integral mit dem Achsschenkel (100) ausgebildet ist.

9. Radaufhängung für das Rad eines Kraftfahrzeugs,
**dadurch gekennzeichnet, dass** diese eine Radnaben-Einheit (10, 20; 30; 40; 50) nach mindestens einem der Ansprüche 1 bis 3 und/oder einen Achsschenkel (100) nach mindestens einem der Ansprüche 4 bis 8 enthält.

10. Verfahren zur Herstellung einer Radnaben-Einheit (10; 20; 30; 40; 50) nach mindestens einem der Ansprüche 1 bis 3 und/oder eines Achsschenkels (100) nach mindestens einem der Ansprüche 4 bis 8,
**dadurch gekennzeichnet, dass** vorgefertigte Funktionsteile (12, 13, 15; 22, 23; 32, 33; 42, 43; 52, 53; 105, 107, 113, 114) in einer Gussform angeordnet und mit dem verflüssigten Kernmaterial umgossen werden.

## Claims

1. Wheel-hub unit (10; 20; 30; 40; 50) for a motor vehicle,
**characterized in that** inserts (12, 13, 15; 22, 23; 32, 33; 42, 43; 52, 53) made from a different material than the core material of the wheel hub are integrated into the wheel hub (11, 21; 31; 41; 51) by partial encapsulation with said core material.

2. Wheel-hub unit according to Claim 1,
**characterized in that** the inserts are formed by the wheel-bearing inner race (12; 22; 32; 42; 52), by the outer shell (13; 23; 33; 43; 53) of the constant-velocity joint, by the brake disk (15), by wheel fastening elements, such as bolts or bushes, and/or by reinforcing elements.

3. Wheel-hub unit according to either of Claims 1 or 2,
**characterized in that** the inserts (12, 13, 15; 22, 23; 32, 33; 42, 43; 52, 53) are structured at their surface of contact with the core material of the wheel hub (11; 21; 31; 41; 51), preferably by profiling, knurling, roughening and/or a coating.

4. Axle stub (100) for a motor vehicle,
**characterized in that** inserts (105, 107, 113, 114) made from a different material than the core material of the axle stub are integrated into the axle stub by partial encapsulation with said core material.

5. Axle stub according to Claim 4,
**characterized in that** the inserts are formed by the wheel-bearing outer race (107), by brake components, such as a brake caliper, a brake cylinder (113) or hydraulic connections, by spring-strut elements (114), by damper elements, by reinforcing elements and/or by pivotal link connection points (105).

6. Axle stub according to either of Claims 4 or 5,
**characterized in that** the inserts (105, 107, 113, 114) are structured at their surface of contact with the core material of the axle stub, preferably by profiling, knurling, roughening and/or a coating.

7. Axle stub according to at least one of Claims 4 to 6,
**characterized in that** the bearing for the wheel is designed as a flange bearing.

8. Axle stub (100) according to Claim 4,
**characterized in that** the latter is formed for accepting a wheel bearing comprising a wheel-bearing outer race (107), a wheel-bearing inner race (103) and rolling-contact elements (108), the wheel-bearing outer race (107) being formed integrally with the axle stub (100).

9. Wheel suspension system for the wheel of a motor vehicle,
**characterized in that** the latter contains a wheel-hub unit (10, 20; 30; 40; 50) according to at least one of Claims 1 to 3 and/or an axle stub (100) according to at least one of Claims 4 to 8.

10. Process for producing a wheel-hub unit (10; 20; 30; 40; 50) according to at least one of Claims 1 to 3 and/or an axle stub (100) according to at least one of Claims 4 to 8,
**characterized in that** pre-produced inserts (12, 13, 15; 22, 23; 32, 33; 42, 43; 52, 53; 105, 107, 113, 114) are arranged in a casting mold and encapsulated with the liquefied core material.

## Revendications

1. Unité de moyeux de roues (10 ; 20 ; 30 ; 40 ; 50) pour un véhicule automobile,
**caractérisée en ce que** dans le moyeu de roue (11, 21 ; 31 ; 41 ; 51), des pièces fonctionnelles (12, 13, 15 ; 22, 23 ; 32, 33 ; 42, 43 ; 52, 53) en un autre matériau que le matériau du noyau du moyeu de roue sont intégrées par coulage périphérique partiel audit matériau du noyau.

2. Unité de moyeux de roues selon la revendication 1,
**caractérisée en ce que** les pièces fonctionnelles sont formées par la bague interne du palier de roue (12 ; 22 ; 32 ; 42 ; 52), par la coque extérieure du joint homocinétique (13 ; 23 ; 33 ; 43 ; 53), par le disque de frein (15), par des éléments de fixation des roues tels que des boulons ou des douilles, et/ou par des éléments de renforcement.

3. Unité de moyeux de roues selon l'une quelconque des revendications 1 ou 2,
**caractérisée en ce que** les pièces fonctionnelles (12, 13, 15 ; 22, 23 ; 32, 33 ; 42, 43 ; 52, 53) sont structurées au niveau de leur surface de contact avec le matériau du noyau du moyeu de roue (11 ; 21 ; 31 ; 41 ; 51), de préférence par profilage, moletage, grainage et/ou par un revêtement.

4. Fusée d'essieu (100) pour un véhicule automobile,
**caractérisée en ce que**, dans la fusée d'essieu, des pièces fonctionnelles (105, 107, 113, 114) en un autre matériau que le matériau du noyau de la fusée d'essieu sont intégrées dans la fusée d'essieu par coulage périphérique partiel audit matériau de noyau.

5. Fusée d'essieu selon la revendication 4,
**caractérisée en ce que** les pièces fonctionnelles sont formées par la bague externe du palier de roue (107), par des composants de frein, comme un étrier de frein, un cylindre de frein (113) ou des raccords hydrauliques, par des éléments de jambe de force (114), par des éléments amortisseurs, par des éléments de renforcement et/ou par des points d'articulation de direction (105).

6. Fusée d'essieu selon l'une quelconque des revendications 4 ou 5,
**caractérisée en ce que**
les pièces fonctionnelles (105, 107, 113, 114) sont structurées au niveau de leur surface de contact avec le matériau de noyau de la fusée d'essieu, de préférence par profilage, moletage, grainage et/ou par un revêtement.

7. Fusée d'essieu selon au moins l'une quelconque des revendications 4 à 6,
**caractérisée en ce que** le palier pour la roue est réalisé sous forme de palier à bride.

8. Fusée d'essieu (100) selon la revendication 4,
**caractérisée en ce qu'**elle est réalisée pour recevoir un palier de roue constitué d'une bague externe du palier de roue (107), d'une bague interne du palier de roue (103) ainsi que des éléments de roulement (108), la bague externe du palier de roue (107) étant réalisée de manière intégrale avec la fusée d'essieu (100).

9. Suspension de roue pour la roue d'un véhicule automobile,
**caractérisée en ce qu'**elle contient une unité de moyeux de roues (10 ; 20 ; 30 ; 40 ; 50) selon au moins l'une quelconque des revendications 1 à 3 et/ou une fusée d'essieu (100) selon au moins l'une quelconque des revendications 4 à 8.

10. Procédé pour fabriquer une unité de moyeux de roues (10 ; 20 ; 30 ; 40 ; 50) selon au moins l'une quelconque des revendications 1 à 3 et/ou une fusée d'essieu (100) selon au moins l'une quelconque des revendications 4 à 8,
**caractérisé en ce que** des pièces fonctionnelles préfabriquées (12, 13, 15 ; 22, 23 ; 32, 33 ; 42, 43 ; 52, 53 ; 105, 107, 113, 114) sont disposées dans un moule de coulée et sont coulées avec le matériau de noyau en fusion.
